(19) Europäisches Patentamt

European Patent Office

Office européen des brevets

(11) Veröffentlichungsnummer: **0 207 349**
**B1**

(12) **EUROPÄISCHE PATENTSCHRIFT**

(45) Veröffentlichungstag der Patentschrift:
18.01.89

(21) Anmeldenummer: **86108154.5**

(22) Anmeldetag: **14.06.86**

(51) Int. Cl.⁴: **B 23 D  19/06**

(54) Saumführungskanal für Bandbehandlungsanlagen.

(30) Priorität: 05.07.85  DE 3524066
          31.10.85  DE 3538777

(43) Veröffentlichungstag der Anmeldung:
07.01.87 Patentblatt 87/2

(45) Bekanntmachung des Hinweises auf die Patenterteilung:
18.01.89 Patentblatt 89/3

(84) Benannte Vertragsstaaten:
CH DE FR GB IT LI

(56) Entgegenhaltungen:
DE-B- 2 547 911
US-A- 2 084 967
US-A- 2 788 853

(73) Patentinhaber: **Sundwiger Eisenhütte Maschinenfabrik Grah & Co, Postfach 740, D-5870 Hemer-Sundwig (DE)**

(72) Erfinder: **Müller, Friedrich, Dipl.-Ing., Teichstrasse 60, D-5870 hemer (DE)**
Erfinder: **Koepe, Wilfried, Dipl.-Ing., Wiehagen 104, D-4712 Werne (DE)**

(74) Vertreter: **Patentanwaltsbüro Cohausz & Florack, Schumannstrasse 97, D-4000 Düsseldorf 1 (DE)**

## Beschreibung

Die Erfindung bezieht sich auf einen Saumführungskanal für Bandbehandlungsanlagen, insbesondere Besäum- oder Längsteilanlagen, der seitlich neben dem Band zwischen einer Saumschere und einer zur Bandführungsebene versetzten Saumverarbeitungsvorrichtung, insbesondere Saumwickler, Saumzerkleinerer, Saumsammelgrube angeordnet ist.

Bei der Herstellung ober Behandlung von Bändern, insbesondere Metallbändern, entsprechen die Bandränder in der Regel nicht den vorgegebenen Massen für das Band. Deshalb werden sie im Durchlauf mit Scheren abgetrennt. Dieses Abtrennen, das sog. Besäumen, im Durchlauf macht eine Führung der Säume erforderlich. Eine solche Führung ist beispielsweise ein Saumführungskanal, der seitlich neben dem Band zwischen der Saumschere und einer weiterverarbeitenden Vorrichtung, z.B. einem Saumzerkleinerer oder dergleichen, angeordnet ist (US-PS 25 00 772). Um eine möglichst störungsfreie Führung des Saumes im Saumführungskanal zu gewährleisten, hat dieser einen verhältnismässig grossen Querschnitt. Ein solcher Saumführungskanal kann aber aus Platzgründen nicht nahe genug an die Schere herangerückt werden, um ein selbständiges Einlaufen des Saumanfanges in den Saumführungskanal zu gewährleisten. Deshalb ist es erforderlich, entweder von Hand die Saumanfänge in den Saumführungskanal einzuführen oder aber im Querschnitt kleinere Saumführungen zwischen der Saumschere und dem Eingang des Saumführungskanales anzuordnen. Es hat sich nun gezeigt, dass in den im Querschnitt verhältnismässig engen Saumführungen sich nicht selten Staus bilden. Diese Störungen des Arbeitsablaufes können nur von Hand beseitigt werden. Die Beseitigung der Staus kann aber auch Unfälle verursachen.

Der Erfindung liegt die Aufgabe zugrunde, einen Saumführungskanal zu schaffen, bei dem ein Eingreifen von Hand beim Einziehen des Saumanfanges nicht erforderlich ist und der weniger empfindlich gegenüber Staus ist.

Diese Aufgabe wird erfindungsgemäss dadurch gelöst, dass in oder an dem Saumführungskanal eine Saumeinziehvorrichtung mit einem aus dem Saumführungskanal heraus bis an die Saumschere heranführbaren Greifer für den Saumanfang angeordnet ist, und dass die Saumeinziehvorrichtung bei eingezogenem Greifer aus einer Stellung innerhalb des Saumführungskanales in eine Stellung ausserhalb des Saumführungskanales bewegbar gelagert ist.

Bei dem erfindungsgemässen Saumführungskanal entfällt die im freien Querschnitt enge Saumführung unmittelbar hinter der Saumschere. Deshalb kann es im Betrieb, wenn diese Führung ohnehin nicht mehr benötigt wird, nicht mehr zu Staus kommen. Die Überführung des Saumanfanges in den Saumführungskanal wird von der Saumeinziehvorrichtung übernommen, die sich nur beim Einziehvorgang im Transportweg des Saumführungskanales befindet.

Der Saumanfang lässt sich problemlos ergreifen, wenn der Greifer als Zange ausgebildet ist.

Nach einer weiteren Ausgestaltung der Erfindung sind am Eingang des Saumführungskanales die Treib- und/oder Führungsrollen für den Saum angeordnet, die zur Bildung eine freien Durchganges für den Greifer auseinanderbewegbar sind. Diese Führungsrollen halten den Saumanfang, wenn der Greifer den Saumanfang freigibt, um aus dem Transportweg des Saumführungskanales herausbewegt werden zu können.

Das Herausbewegen der Saumeinzieheinrichtung aus dem Transportweg des Saumführungskanales lässt sich auf einfache Weise dadurch ermöglichen, dass die Saumeinziehvorrichtung zur Längsachse des Saumführungskanales quer verfahrbar oder schwenkbar ist. Dabei ist nach einer besonders vorteilhaften Ausgestaltung die Saumeinziehvorrichrung auf der Aussenseite einer der Wände des Saumführungskanales angeordnet, die quer in den Saumführungskanal einbringbar ist.

Im folgenden wird die Erfindung anhand einer Zeichnung näher beschrieben. Im einzelnen zeigen:

Fig. 1 ein Band in einer Bandbehandlungsanlage, z.B. einer Streck-/Richtanlage in Aufsicht:

Fig. 2 - 4 einen Saumführungskanal in Seitenansicht in verschiedenen Betriebsphasen beim Einziehen eines Saumanfanges.

Ein in einer Streck-/Richtanlage 1 zu behandelndes Band 2 wird von einem einlaufseitigen und einem auslaufseitigen Spannrollensatz 3,4 geführt. An den beiden Rändern des Bandes 2 ist jeweils eine Besäumvorrichtung aus einer Saumschere 5 und einem Saumführungskanal 6 angeordnet.

Die Besäumschere 5 besteht aus kreiszylindrischen Messern 7, 8.

Der Saumführungskanal 6 hat einen rechteckigen Querschnitt. Die untere Wand 9 weist einen quer zur Längsachse des Kanales 6 verfahrbaren Teil 10 auf, der auf seiner Aussenseite eine Saumeinziehvorrichtung 11 trägt. Die Saumeinziehvorrichtung 11 besteht aus einem Antrieb 12, z.B. einer Zylinderkolbenanordnung, einer ausfahrbaren Zugstange 13 und einem am freien Ende angeordneten, als Zange ausgebildeten Greifer 14. Am Eingang des Saumführungskanales 6 sind zwei angetriebene und auseinanderfahrbare Führungsrollen 15,16 angeordnet.

Im folgenden wird die Funktion des Saumführungskanales beschrieben:

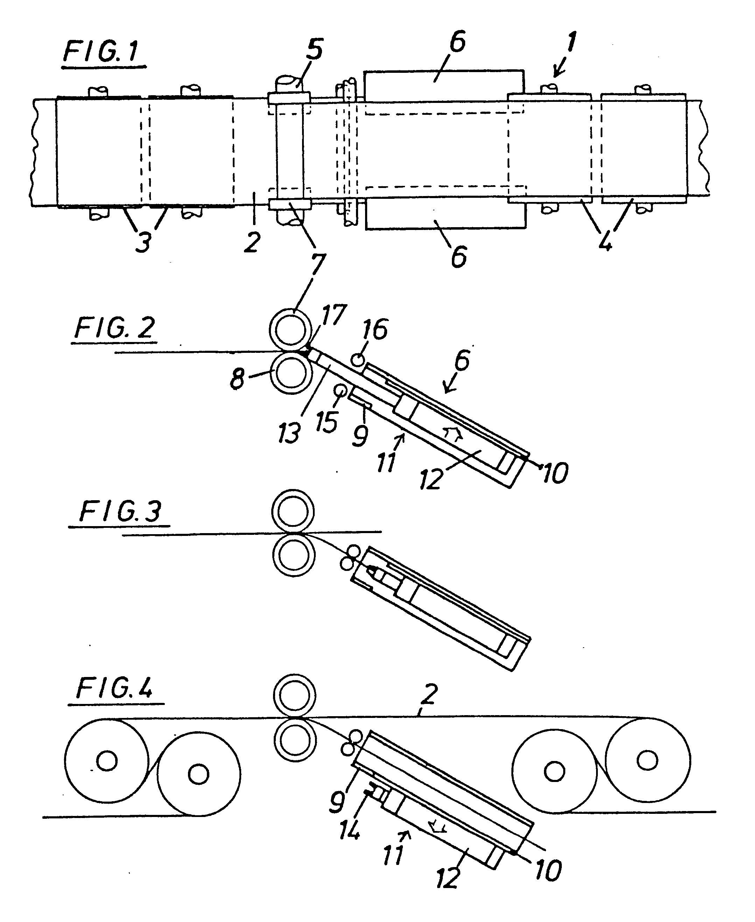

Zum Ergreifen des aus der Saumschere 5 herausragenden Saumanfanges 17 wird der Wandteil 10 in den Saumführungskanal 6 hineingefahren und nach Öffnen der Führungsrollen 15,16 die Zugstange 13 mit geöffneter Zange 14 bis nahe an die Saumschere 5 ausgefahren Fig. 2). Nach Schliessen der Zange 14 kann die Stange 13 wieder eingefahren werden, wobei sie den Saumanfang mitnimmt (Fig. 3). Sobald der Saumanfang 17 die Führungsrollen 15,16 passiert hat, können diese zusammengefahren werden und den Saumanfang einklemmen. Jetzt kann die Zange 14 wieder geöffnet werden. Nach weiterem Einziehen der Stange 13 wird der Wandteil 10 wieder aus dem Saumführungskanal 6 herausgefahren und in eine Flucht mit der übrigen Wand 9 gebracht (Fig. 4). Damit ist der freie grosse Querschnitt für die staufreie Führung des Saumes wiederhergestellt.

Es versteht sich, dass der Saumführungskanal auch für andere Bandführungsrichtungen als dargestellt geeignet ist.

## Pantentansprüche

1. Saumführungskanal (6) für Bandbehandlungs-anlagen, insbesondere Besäum- oder Längsteilanla-gen, der seitlich neben dem Band (2) zwischen einer Saumschere (5) und einer zur Bandführungsebene versetzten Saumverarbeitungsvorrichtung, insbe-sondere Saumwickler, Saumzerkleinerer, Saumsam-melgrube angeordnet ist, dadurch gekennzeichnet, dass in oder an dem Saumführungskanal (6) eine Saumeinziehvorrichtung (11) mit einem aus dem Saumführungskanal heraus bis an die Saumschere (5) heranführbaren Greifer (14) für den Saumanfang (17) angeordnet ist, und dass die Saumeinziehvorrichtung (11) bei eingezogenem Greifer (14) zur Freigabe des Saumführungskanales aus einer Stellung innerhalb des Saumführungskanales in eine Stellung ausserhalb des Saumführungskanales bewegbar gelagert ist.

2. Saumführungskanal nach Anspruch 1, dadurch gekennzeichnet, dass der Greifer (14) als Zange ausgebildet ist.

3. Saumführungskanal mit Treib- und/oder Führungsrollen nach Anspruch 1 oder 2, dadurch gekennzeichnet, dass am Eingang des Saumführungskanales (6) Treib- und/oder Führungsrollen (15,16) für den Saum angeornet sind, die zur Bildung eines freien Durchganges für den Greifer (14) auseinanderbewegbar sind.

4. Saumführungskanal nach einem der Ansprüche 1 bis 3, dadurch gekennzeichnet, dass die Saumeinziehvorrichtung (11) zur Längsachse des Saumführungskanales (6) quer verfahrbar oder schwenkbar ist.

5. Saumführungskanal mit Wänden nach einem der Ansprüche 1 bis 4, dadurch gekennzeichnet, dass die Saumeinziehvorrichtung (11) auf der Aussenseite einer der Wände (10) des Saumführungskanales (6) angeordnet ist, die quer in den Saumführungskanal (6) einbringbar ist.

## Claims

1. Trim guide channel (6) for strip handling plants, in particular trimming or slitting plants, which channel is arranged alongside the strip (2) between a trimming shears (5) and a trim processing device, in particular a trim winder, trim crusher, trim collecting pit, offset with respect to the strip guide plane, characterized in that a trim drawing-in device (11) with a gripper (14), which can be moved out of the trim guide channel up to the trimming shears (5) and is for the trim start (17), is arranged in or at the trim guide channel (6), and in that, with drawn-in gripper (14), the trim drawing-in device (11) is mounted such that it can be moved out of a position inside the trim guide channel into a position outside the trim guide channel to clear the trim guide channel.

2. Trim guide channel according to Claim 1, characterized in that the gripper (14) is designed as tongs.

3. Trim guide channel with drive and/or guide rollers according to Claim 1 or 2, characterized in that drive and/or guide rollers (15,16) for the trim are arranged at the entrance of the trim guide channel (6), which rollers can be moved apart to form a free passage for the gripper (14).

4. Trim guide channel according to one of Claims 1 to 3, characterized in that the trim drawing-in device (11) can be moved or swung transversely to the longitudinal axis of the trim guide channel (6).

5. Trim guide channel with walls according to one of Claims 1 to 4, characterized in that the trim drawing-in device (11) is arranged on the outside of the walls (10) of the trim guide channel (6), which can be brought transversely into the trim guide channel (6).

## Revendications

1. Canal de guidage de bord (6) pour installations de traitement de bandes, en particulier installations de rognage ou de coupe longitudinale, qui est disposé latéralement à côté de la bande (2) entre une cisaille (5) à ronger les bords matés et un dispositif de façonnage de bord décalé par rapport au plan de guidage de bande, en particulier enrouleuse de bord, désintégrateur de bord, puisard de bord, caractérisé par le fait qu'un dispositif de relevage de bord (11) est disposé dans ou sur le canal de guidage de bord (6) avec un preneur (14) pour le début de bande (17) pouvant être guidé hors du canal de guidage de bord jusqu'à la cisaille (5) à ronger les bords matés, et que le dispositif de relevage de bord (11) est monté mobile, le preneur (14) étant relevé, depuis une position à l'intérieur du canal de guidage de bord jusqu'à une position à l'extérieur du canal de guidage de bord, pour la libération du canal de guidage de bord.

2. Canal de guidage de bord selon la revendication 1, caractérisé par le fait que le preneur (14) est construit sous forme de pince.

3. Canal de guidage de bord avec des rouleaux moteurs et/ou de guidage selon la revendication 1 ou 2, caractérisé par le fait que des rouleaux moteurs et/ou de guidage (15, 16) pour le bord sont disposés à l'entrée du canal de guidage de bord (6), et sont mobiles les uns hors des autres pour former un passage libre pour le preneur (14).

4. Canal de guidage de bord selon l'une des revendications 1 à 3, caractérisé par le fait que le dispositif de relevage de bord (11) peut être déplacé ou peut pivoter obliquement à l'axe longitudinal du canal de guidage de bord.

5. Canal de guidage de bord selon l'une des revendications 1 à 4, caractérisé par le fait que le dispositif de relevage de bord (11) est disposé sur la face extérieure d'une des parois (10) du canal de guidage de bord (6) qui peut être amené obliquement dans le canal de guidage de bord (6).

EP 0 207 349 B1

FIG.1

FIG.2

FIG.3

FIG.4